# EUROPEAN PATENT SPECIFICATION

(11) **EP 2 032 411 B1**
(45) Date of publication and mention of the grant of the patent: **13.11.2013**
(21) Application number: 07825810.0
(22) Date of filing: 13.06.2007
(51) Int. Cl.: B62B 3/12, B62B 5/00

(54) **DEVICE FOR PULLING BICYCLE OR TRICYCLE**
VORRICHTUNG ZUM ZIEHEN EINES FAHRRADES ODER DREIRADES
DISPOSITIF PERMETTANT DE TIRER UNE BICYCLETTE OU UN TRICYCLE

(30) Priority: 14.06.2006 GB 0611729
(43) Date of publication of application: 11.03.2009
(73) Proprietor: Armstrong, Bernard Paul, Slinfold, West Sussex RH13 0RY (GB); Armstrong, Elaine Margaret Munro, Slinfold, West Sussex RH13 0RY (GB)
(72) Inventor: ARMSTRONG, Elaine Margaret Munro, West Sussex RH13 ORY (GB)
(74) Representative: Ratcliffe, Susan Margaret
(86) International application number: PCT/IB2007/052242
(87) International publication number: WO 2008/007250

(56) References cited:
- EP-A- 1 099 597
- WO-A-2005/016719
- DE-U1- 20 112 149
- US-A1- 2002 033 584
- US-A1- 2005 253 348
- US-A1- 2005 284 826

## Description

The present invention relates to a device to facilitate the pulling of a child's bicycle or tricycle, while maintaining it upright, optionally with a child seated on the cycle.

Devices are already available to facilitate the transportation of two children when using a perambulator consisting of a wheeled standing board connected to the lower rear part of the perambulator, such that an older child may stand on the standing board while a younger child lies or sits in the perambulator. PCT Patent Publication No. WO 93/22179 describes a connecting device for securing such a standing board to the perambulator.

Another requirement that can arise when a parent or other adult is walking with small children is the need to include a child's cycle (which may be a bicycle or tricycle) in the walking group. This may involve the need for a child to be seated on the cycle while the adult pulls it (for example, because it is not safe for the child to cycle freely, or because the child is tired); or the child may want to walk alongside the adult holding the adult's hand, while the adult pulls the cycle with the other hand; or the adult may be pulling the cycle while walking to meet the child from school or another activity, so that the child can ride the cycle home. Any of these situations may also include one or more additional children either walking or in a perambulator. In all of these situations, it can prove tricky for the adult to hold and pull the cycle securely while also holding onto and watching over the accompanying children, and possibly also pushing a perambulator or similar.

The device of the present invention assists in securing and pulling the cycle in such situations, while leaving the adult freer to hold and watch the accompanying children. Any such device should also desirably be readily portable so that it can easily be carried by the adult when not in use because the child is cycling freely; moreover, the device should preferably be able to be carried while leaving the adult's hands free to hold other children or carry other items.

A number of single-axle, two-wheeled trailers have previously been proposed for the purpose of towing one bicycle by another bicycle (see, for example, US 5 454 578 (Neack, published 03 Oct 1995), DE 101 06 878 C1 (Brenneken, published 29 May 2002), and DE 201 12 149 U1 (Krammer, published 22 Nov 2001). All of those trailers are substantial and non-portable devices designed to ensure that the towed bicycle is very firmly secured to the trailer. Their lack of portability and their two-wheeled construction renders them unsuitable for the present purpose.

A transporting assembly for manually manoeuvring a motorcycle is described in US 2002/0119035 (Hamilton published 29 Aug 2002). That is a complex and non-portable construction wholly unsuited for use with a child's cycle.

The present invention, now provides a device to facilitate the pulling of a child's cycle according to claim 1.

The invention will now be described in more detail with reference to the accompanying drawings, which illustrate one embodiment of the device according to the present invention, and in which
Figure 1 is a view from above of one embodiment of the device according to the present invention;
Figure 2 shows a cross-section of the embodiment along the line A-A in the direction shown by the arrows marked in Figure 1;
Figure 3 is an underneath view of the embodiment shown in Figure 1;
Figure 4 is an end view of the embodiment in the direction of the arrow B marked in Figure 1;
Figure 5 is an end view of the embodiment in the direction of the arrow C marked in Figure 1; and
Figure 6 is a perspective view of the device while being used to accommodate a bicycle.

The device comprises a substantially horizontal platform 1, provided with three wheels 2, 3, 4 on its underside. A slot 5 in the platform 1 is sized so as to accommodate the lower part of the front wheel of a child's bicycle. A hole 6 provides a means for securing a rope handle by which the device may be pulled while the adult user is walking.

In this embodiment, the platform 1 is substantially isosceles triangular, with three wheels 2, 3, 4. An isosceles triangular shape for the platform 1 can provide an optimal combination of stability and compactness of the device. The isosceles triangular shape has two longer sides and a shorter base: in use, the apex between the two longer sides is the front of the device and the shorter base is the rear of the device. Likewise, the use of three wheels 2, 3, 4 on the device provides an optimal combination of stability, compactness and manoeuvrability. The shape of the device is, however, not critical to the invention, and the platform could, for example, be rectangular or circular without detracting from its functionality. Normally, the device would be designed to be as compact as possible commensurate with providing sufficient stability, especially when securing a bicycle. Compactness is desirable for storage and transport. The device should not, or course, be so long as to interfere with either the rear wheel or the pedals of the bicycle at its rear end, nor with the person(s) walking and pulling the device at its front end. Suitably, the length of the device should not exceed about 600 mm, nor the width exceed about 450 mm. In the embodiment shown, the platform 1 has a maximum length of 400 to 450 mm, with a maximum width of about 300 mm.

The platform 1 may be of a variety of materials, for example wood, metal, plastics (especially injection-moulded plastics), fibreglass, or another light-weight but rigid material.

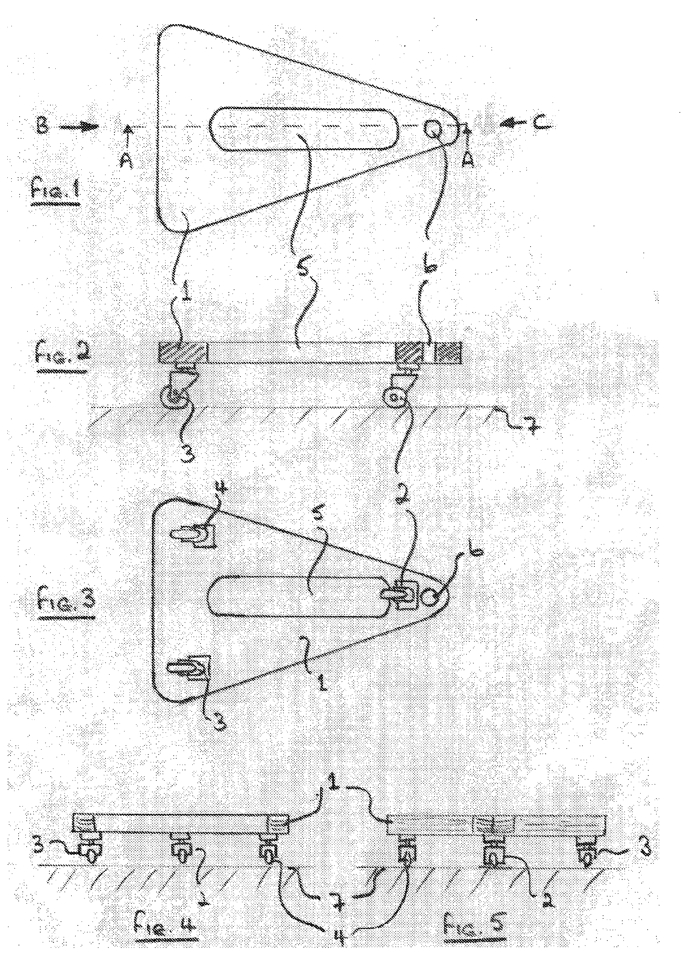

Platform 1 includes a slot 5 sized so as to accommodate the lower part of the front wheel of a child's cycle. This constitutes the means for holding the front wheel of a child's cycle (especially a bicycle) in a substantially vertical orientation and raised a short distance above the ground. The width of slot 5 is such that part of the circumference of the wheel of a child's cycle can readily be placed into and removed from the slot, with no substantial resistance but with little lateral leeway, such that the wheel is accommodated fairly snugly within the slot. The length of the slot 5 is such that when part of the circumference of the wheel of a child's cycle is placed into the slot to the full extent possible, with the wheels of the device resting on the ground as shown in Figures 2, 4 & 5, then the wheel of the cycle will not be touching the ground. In other words, the height of the platform 5 above the ground slightly exceeds the depth of the segment of the wheel protruding through the platform. In the embodiment shown, the width of the slot 5 is approximately 60 mm, and its maximum length is about 240 mm; the height of the top of the platform 1 from the ground is about 80 to 85 mm with wheels 2, 3 ,4 of about 50 mm diameter, or about 100 mm above ground with wheels 2, 3 ,4 of about 75 mm diameter. This is suitable for a cycle wheel external diameter (i.e. including the tyre) within the range of about 25 to 35 cm (from 10 to 14 inches).

Children's bicycles typically have wheel diameters of from 25 cm, more commonly from 30 cm, up to 40 cm (from 10 inches, more commonly from 12 inches, up to 16 inches), but the present device would more usually be used with bicycles for younger children, and typically with wheel diameters of up to 35 cm (up to 14 inches). Children's tricycles typically have wheel diameters of up to 25 cm (up to 10 inches).

For a given cycle wheel size, there is a relationship between the length of the slot accommodating the wheel and the height of the platform above the ground, in that the greater the platform height above the ground, the larger the segment of the wheel that can be accommodated within and below the device, and thus reducing the risk of the wheel becoming dislodged from the device. On the other hand, increase in the platform height, necessarily increases the size of the device and decreases its compactness and portability.

In order to facilitate use of the device with cycles of different wheel sizes, the slot 5 may be of adjustable length. This could be achieved, for example, by providing one or more moveable (or removable) lugs or stops along the length of the slot or other holding means. Such lugs or stops may be slideable or may have multiple discrete fixing locations, effectively adjusting the length of the slot or other holding means available for securing the wheel.

Preferably, the cycle wheel should be secured such that its lowest point is at least 5 mm, more preferably at least 10 mm, above the ground, so as to avoid risk of the bicycle wheel hitting raised patches of ground. In order to avoid problems of the wheel hitting the ground when the device is pulled up or down a kerb or used on rough ground, typically the ground clearance should be in the region of 25 to 50 mm. Conversely, too great a ground clearance would cause the front of the cycle to become inclined upwards and would decrease stability of the bicycle. To that end, the ground clearance should not normally exceed 200 - 300 mm, and preferably be less than 100 mm.

Additionally, the distance between the rear of the slot 5 (or other means for securing the wheel of the cycle) and the rear edge of the platform 1 should preferably be kept to a minimum commensurate with stability so as not to interfere with rotation of the pedals of the cycle and the child's feet thereon. This distance should normally not exceed 100 mm, and preferably be less than 50 mm, especially when used with smaller cycles. With children's tricycles, the pedals are often attached directly to the front-wheel axis and hence, with the front wheel of the tricycle located in the slot 5, the pedals will be raised above the platform 1, will not be rotating as the wheel will be off the ground, and will not interfere with the platform especially when they are in a near-horizontal position.

In the embodiment shown, the platform 1 has a thickness of 15 to 20 mm, and thus the slot 5 has a similar depth. It is this depth of the slot, combined with little lateral leeway between the width of the wheel and the sides of the slot, that serves to secure the wheel - and hence the bicycle - in a substantially vertical orientation. This constitutes a simple and efficient method of holding the wheel in the necessary orientation, but this is not the only method of holding the wheel. If, for example, the platform were of substantially less thickness, as could be the case with a platform made of metal or of a rigid plastics material, then the slot could be provided with upstanding and/or downstanding flanges or lugs along its sides, in order to provide the required means for holding the front wheel of a child's bicycle in a substantially vertical orientation. Such flanges or lugs could be adjustable to accommodate different sizes of wheels: different wheel thicknesses and/or different wheel diameters.

The means for holding the wheel could alternatively be provided by a flat or arc-shaped grooved member for receiving the lower part of the cycle wheel and situated on top of or through, and along the centre line of, the platform.

For additional safety, one or more straps, rods or the like is desirably provided for securing the wheel to the device, especially if a child is seated on the cycle. Such straps or rods could pass over or, preferably, through the front wheel of the cycle so as to prevent it from unintentionally becoming dislodged from the device. For example, in the embodiment shown in the drawings, a security strap may be affixed on one side of the slot 5 such that it can be passed through or around the front wheel or other part of the cycle, with the other end of the strap being detachably secured on the other side of the slot, thus securing the cycle to the device. Security straps may alternatively or additionally be provided along the length of the device. Any such straps should preferably be of adjustable length. Straps of nylon or similar material, adjustably fitted with one or more buckles or clips, are suitable for this purpose.

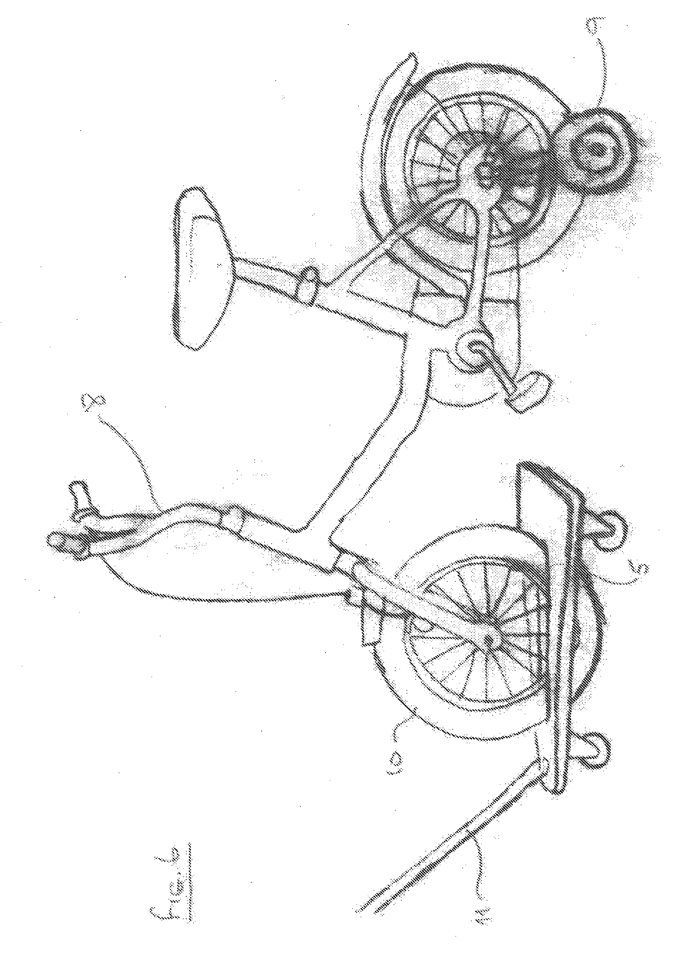

The device is primarily intended for use with a child's bicycle that is fitted with rear stabiliser wheels either side of the main rear wheel to prevent the bicycle from toppling sideways (see Figure 6), or with a tricycle. The device can be used with a bicycle without stabiliser wheels, but the adult user would need to be aware that the overall assembly (device and bicycle) would be less stable, especially if a child were sitting on the bicycle. This could be counteracted to some extent by having a wider wheelbase on the device. It is, however, generally when the child is of such an age or experience that he/she is using a bicycle with stabiliser wheels or a tricycle that need arises for the adult to tow a bicycle or tricycle.

When the device is being used with a bicycle with stabiliser wheels or with a tricycle, the snugness of the fit of the front wheel of the cycle within the slot 5 (or other means for holding the wheel substantially upright) is less critical than when used with a bicycle without stabiliser wheels. This is because the pair of stabiliser wheels or rear tricycle wheels assist in maintaining the cycle upright and hence a little slack in the fit of the front wheel within the device can be tolerated, whereas with a standard bicycle (without stabiliser wheels) a more snug fit, with less sideways leeway, is desirable in order to maintain the assembly in a stable manner.

The device according to the invention also comprises a handle for pulling the device while walking or means for securing such a handle thereto. In the embodiment shown in the drawings, this is provided simply as a hole 6 in the platform 1 through which a rope, cord or strap may be tied to constitute the handle. This provides a simple, compact and easily adjustable handle for the device. Thus the means for securing a handle may simply be a hole, hook, eye or similar to which a length of rope or cord may be secured, for example simply by looping the rope, cord or strap through the hole, hook or eye, or by use of a clip (such as a spring clip). In a preferred embodiment, the device is provided with a rigid handle (for example of metal or plastics) in order that the adult pulling the device has more control over its movement, and hence over the safety of any child sitting on the cycle. Such a rigid handle may be secured permanently to the device or may be detachable, and potentially interchangeable with a rope-type handle. It may also be telescopic, for obvious reasons of compactness and storage.

It has been found that a flexible handle, such as a rope, cord or strap, is often adequate when the device is being used on fairly level ground. This can also be easier for the accompanying adult to hold when also having to hold onto other children or carry other items. When the device is being used on a down-hill slope, however, a more rigid handle is preferred to provide more control and prevent the device from running away down hill. A more rigid handle with a hand-grip or similar can also be preferred when the adult is additionally pushing a child's buggy, perambulator or other wheeled apparatus.

One way of providing a multi-purpose handle is to have a flexible handle, such as a rope or similar, passing through a removable rigid or semi-rigid sleeve. With the sleeve in place, the handle will be rigid or semi-rigid, and with the sleeve removed the handle will be flexible.

The wheels 2, 3 4 of the illustrated embodiment are simple castor-type wheels. The device has 3 wheels to provide an optimum combination of stability and manoeuvrability and in said three-wheeled device, the single wheel is pivotable but the other two wheels are fixed.

Although the wheels may be provided with a suspension system, this is not generally necessary when the device is intended to be used simply for pulling a cycle. Even if a child were sitting on the cycle when pulled, the rear end of the cycle on which the child is seated may have its own suspension system and in any case would not be directly above the device. It is envisaged that the device will normally be used for pulling cycles along a hard-surfaced road, path or similar and, as such, the device may have.only small wheels, of, for example 40 to 50 mm diameter. The use of small wheels also keeps the size of the device compact. Larger wheels of up to, for example, 100 mm, or even 150 mm, diameter may, however, be incorporated in the device, especially if it is designed to be used over rough ground. Larger wheels can also improve performance when the device is pulled up or down a kerb. A preferred wheel size is from 50 to 100 mm diameter.

In Figure 6, a child's bicycle 8, which is fitted with stabiliser wheels 9, has its front wheel 10 located within the slot 5 of the device, with the front wheel 10 raised slightly above the ground. The device is fitted with a rigid handle 11 by which it may be pulled.

Using an assembly of the type shown in Figure 6, the device - and thus also the child's cycle - can safely and conveniently be pulled by an adult, while the adult can also hold a child and/or push a perambulator. Optionally, a child may be sitting on the cycle being towed.

The device of the present invention can be compact, light-weight and readily portable. This enables it to be carried easily by the adult when not in use, such as when the child is cycling freely. Moreover, the device can be made sufficiently compact to be carried in a back pack or slung over a shoulder, thus leaving the adult's hands free to hold children or carry other items. To that end, the device may optionally include a detachable carrying strap. If the device includes a flexible handle, particularly one in the form of a rope, cord or strap, that handle may also serve as a carrying strap, there being means to affix it to a second location on the device so as to form a loop. As a further option, depending on their configuration, any security strap or straps provided for securing the cycle's front wheel to the device may, when the device is not in use, be configured as a carrying strap or straps.

Although the present device has been described primarily with reference to use in conjunction with a child's bicycle, the device could equally satisfactorily be used with a child's tricycle, the only difference being that tricycles usually have smaller wheels and therefore the device itself could be smaller. It would, of course, be necessary for the device to securely hold the smaller wheel of a tricycle, either by having a smaller slot or other receptacle for the wheel or by including suitable adjustment permitting the securing of different sized wheels.

Child's tricycles now frequently have a rear-protruding handle to provide some control to an accompanying adult. Specifically, however, such a rear handle does not provide any control over the steering of the tricycle: the child on the tricycle can usually steer the tricycle independently of the adult. The adult can steer the tricycle (with or without a child sitting on it) only by pushing down on the handle to lift the tricycle's front wheel off the ground, which is far from convenient. The device of the present invention, on the other hand, - particularly when fitted with a rigid handle-enables an adult to control the tricycle from the front, instead of from the rear. This provides more control to the adult, and also enables the tricycle to be pulled in a forward-facing direction and with control over the steering.

A bicycle or tricycle can be placed in and secured to the present device - and also be detached and removed - simply and quickly. The device is also of simple construction and hence can be manufactured fairly cheaply.

## Claims

1. A device to facilitate the pulling of a child's cycle (8), comprising a substantially horizontal wheeled platform (1) incorporating means for holding the front wheel (10) of a child's cycle in a substantially vertical orientation and raised a short distance above the ground, and comprising a handle (11) for pulling said device while walking or means (6) for securing such a handle thereto **characterised in that** the device has three wheels (2,3,4) wherein the wheels are in a triangular arrangement the single wheel (2) at the apex of the triangular arrangement is positioned so that when a front wheel (10) of the child's cycle (8) is in position in the wheeled platform (1) the single wheel (2) is in front of the front wheel (10) of the child's cycle, said single wheel is pivotable about a vertical axis and the other two wheels (3,4) of the triangular arrangement are fixed.

2. A device as claimed in claim 1, wherein the platform (1) is of substantially isosceles triangular shape.

3. A device as claimed in any one of the preceding claims, wherein the means for holding the front wheel (10) is a slot (5) within the platform(1) the slot being sized so as to accommodate said front wheel (10)and hold it in a substantially vertical orientation.

4. A device as claimed in any one of the preceding claims, wherein the means for holding the front wheel (10) is adjustable to accommodate different wheel sizes.

5. A device as claimed in any one of the preceding claims, additionally comprising means for securing the front wheel (10) to the device.

6. A device as claimed in claim 5, wherein the means for securing the front wheel (10) is a strap that can be passed over or through the front wheel (0) of the child's cycle (8).

7. A device as claimed in any one of the preceding claims, which includes a carrying strap.

## Patentansprüche

1. Eine Vorrichtung zum vereinfachten Ziehen eines Kinderfahrrades (8), umfassend eine im wesentlichen horizontale Plattform mit Rädern (1) bestehend aus einer Einrichtung für das Halten des Vorderrads (10) eines Kinderfahrrades in einer im wesentlichen senkrechten Ausrichtung und in einem kurzen Abstand über dem Boden, und umfassend einen Griff (11) für das Ziehen der genannten Vorrichtung während des Gehens oder eine Einrichtung (6) für das Befestigen eines solchen Griffs an dieser, **dadurch gekennzeichnet, dass** die Vorrichtung drei Räder (2, 3, 4) aufweist und diese Räder in einer Dreiecksanordnung angeordnet sind und das eine Rad (2) an der Spitze der Dreiecksanordnung so positioniert ist, dass sich dieses eine Rad (2) vor dem Vorderrad (10) des Kinderfahrrades befindet, wenn ein Vorderrad (10) des Kinderfahrrades (8) innerhalb der Plattform mit Rädern (1) positioniert ist, und wobei das genannte eine Rad um eine senkrechte Achse herum drehbar ist und die anderen beiden Räder (3, 4) der Dreiecksanordnung fest angebracht sind.

2. Eine Vorrichtung nach Anspruch 1, wobei die Plattform (1) eine im Wesentlichen gleichschenklige Dreiecksform aufweist.

3. Eine Vorrichtung nach einem der vorhergehenden Ansprüche, wobei die Einrichtung für das Halten des Vorderrades (10) aus einem Schlitz (5) in der Plattform (1) besteht und die Größe des Schlitzes so ausgelegt ist, dass dieser das genannte Vorderrad (10) aufnimmt und dieses in einer im wesentlichen senkrechten Ausrichtung hält.

4. Eine Vorrichtung nach einem der vorhergehenden Ansprüche, wobei die Einrichtung für das Halten des Vorderrades (10) einstellbar ist, um unterschiedliche Radgrößen aufnehmen zu können.

5. Eine Vorrichtung nach einem der vorhergehenden Ansprüche, weiter eine Einrichtung für das Befestigen des Vorderrades (10) an der Vorrichtung umfassend.

6. Eine Vorrichtung nach Anspruch 5, wobei die Einrichtung für das Befestigen des Vorderrades (10) ein Gurt ist, der über oder durch das Vorderrad (10) des Kinderfahrrades (8) hindurch geführt werden kann.

7. Eine Vorrichtung nach einem der vorhergehenden Ansprüche, welche einen Tragegurt beinhaltet.

## Revendications

1. Un dispositif pour tirer une bicyclette d'enfant (8), comprenant une plateforme à roulettes sensiblement horizontale (1) comprenant un moyen de supporter la roue avant (10) d'une bicyclette d'enfant dans une position sensiblement verticale et soulevée à courte distance au-dessus du sol, et comprenant une poignée (11) pour tirer ledit dispositif en marchant ou un moyen (6) pour fixer une telle poignée à ce dernier, **caractérisé en ce que** le dispositif est équipé de trois roues (2,3,4) lesquelles roues sont disposées de façon triangulaire, la roue unique (2) au sommet de la disposition triangulaire est placée pour que lorsqu'une roue avant (10) de la bicyclette d'enfant (8) est en position dans la plateforme à roulettes (1), la roue unique (2) se trouve en face de la roue avant (10) de la bicyclette d'enfant, ladite roue unique pivote sur un axe vertical et les deux autres roues (3,4) de la disposition triangulaire sont fixes.

2. Un dispositif selon la revendication 1, dans lequel la plateforme (1) est en forme de triangle sensiblement isocèle.

3. Un dispositif selon l'une quelconque des revendications précédentes, dans lequel le moyen de supporter la roue avant (10) est une encoche (5) dans la plateforme (1), l'encoche étant dimensionnée pour loger ladite roue avant (10) et la maintenir dans une position sensiblement verticale.

4. Un dispositif selon l'une quelconque des revendications précédentes, dans laquelle le moyen de support de la roue avant (10) est réglable pour accueillir différentes tailles de roues.

5. Un dispositif selon l'une quelconque des revendications précédentes comprenant en outre un moyen de fixer la roue avant (10) au dispositif.

6. Un dispositif selon la revendication 5 dans lequel la fixation de la roue avant (10) est une sangle qui peut être passée sur ou au travers de la roue avant(10) de la bicyclette d'enfant (8).

7. Un dispositif selon l'une quelconque des revendications précédentes comprenant une sangle de transport.
